# EUROPÄISCHE PATENTANMELDUNG

(11) **EP 3 779 542 A1**
(43) Veröffentlichungstag der Anmeldung: **17.02.2021**
(21) Anmeldenummer: 19192156.8
(22) Anmeldetag: 16.08.2019
(51) Int. Cl.: G02B 6/44, G02B 6/50, F16L 7/00

(54) **VERWENDUNG EINER KLEBETÜLLE**

(71) Anmelder: Hauff-Technik GmbH & Co. KG, 89568 Hermaringen (DE)
(72) Erfinder: KURZ, Ralf, 89537 Giengen (DE)
(74) Vertreter: König Szynka Tilmann von Renesse Patentanwälte Partnerschaft mbB

(57) **Zusammenfassung**

Die Erfindung betrifft die Verwendung einer Klebetülle (1), welche Klebetülle (1) einen Flächenabschnitt (2) und einen Tüllenabschnitt (3) aufweist, zum Herstellen eines Leitungsabzweigs aus einem Schutzrohr (20).

## Beschreibung

Die vorliegende Erfindung betrifft die Verwendung einer Klebetülle.

Die in Rede stehende Klebetülle weist einen Flächenabschnitt mit einer Klebstoffschicht und einen Tüllenabschnitt auf.

Der vorliegenden Erfindung liegt das technische Problem zugrunde, eine vorteilhafte Verwendung anzugeben.

Dies wird erfindungsgemäß mit der Verwendung gemäß Anspruch 1 gelöst. Dabei wird die Klebetülle zur Herstellung eines Leitungsabzweigs an einem Schutzrohr genutzt. Der Abzweig erfolgt dabei durch eine Öffnung in der Mantelwand des Schutzrohres, also zu dessen beiden Enden beabstandet. In dem Schutzrohr wird bzw. ist ein Leitungsstück verlegt, das an der Öffnung abgezweigt wird. Der Tüllenabschnitt der Klebetülle ist an einer ersten Seite des Flächenabschnitts angeordnet, und an der entgegengesetzten zweiten Seite des Flächenabschnitts befindet sich die Klebstoffschicht. Bei der Montage der Klebetülle wird das Ende des Leitungsstücks von der zweiten Seite des Flächenabschnitts her an bzw. in den Tüllenabschnitt gesetzt und wird der Flächenabschnitt mittels der Klebstoffschicht auf die Mantelwand geklebt.

Im Ergebnis bedeckt die Klebetülle die Öffnung in der Mantelwand. Das Ende des Leitungsstücks kann dabei an bzw. in dem Tüllenabschnitt angeordnet sein, es kann aber auch durch den Tüllenabschnitt hindurch weiter nach außen verlegt werden. Unabhängig von der Position im Einzelnen kann der Tüllenabschnitt gegen das Leitungsstück gedichtet sein, sodass die Klebetülle die Öffnung in der Mantelwand insgesamt dicht verschließt.

Besonders vorteilhaft kann eine Anwendung sein, bei welcher in dem Schutzrohr ein Bündel mehrerer Leitungen bzw. Leitungsstücke verläuft, wobei entlang des Schutzrohres mehrere Abzweige erstellt werden. An jedem Abzweig wird eine Leitung bzw. ein Leitungsstück des Bündels abgezweigt. Ein solches Schutzrohr kann sich z. B. entlang eines Gehwegs bzw. einer Straße erstrecken, mit jedem Abzweig kann dann ein Verbraucher angeschlossen werden, also bspw. ein Haushalt. Das Schutzrohr wird im Erdreich verlegt, und das bündelweise Zusammenfassen der Leitungen kann bspw. hinsichtlich des Platzbedarfs von Vorteil sein. Mit der erfindungsgemäßen Verwendung können die Abzweige entlang des Schutzrohres vergleichsweise einfach und damit zügig erstellt werden, was in Anbetracht der oftmals unter Zeitdruck erfolgenden Arbeiten in einem Graben von Vorteil ist (der ausgehobene Graben kann bspw. ein Verkehrshindernis bzw. eine Gefahrenquelle darstellen). Andererseits lassen sich die Öffnungen mit den Klebetüllen auch jeweils zuverlässig verschließen bzw. abdichten, es kann einem Feuchte- bzw. Verschmutzungseintrag oder bspw. auch einem Insekteneintritt vorgebeugt werden. Zuverlässig und reproduzierbar verschlossene Schutzrohröffnungen können auch sicherheitsrelevant sein, nämlich bspw. einer Schleichgasausbreitung über das Schutzrohr vorbeugen.

Bevorzugte Ausgestaltungen finden sich in den abhängigen Ansprüchen und der gesamten Offenbarung, wobei bei der Darstellung der Merkmale nicht immer im Einzelnen zwischen den unterschiedlichen Anspruchskategorien unterschieden wird; jedenfalls implizit ist die Offenbarung sowohl auf Verwendungs- bzw. Verfahrensaspekte als auch hinsichtlich entsprechender Vorrichtungsmerkmale zu lesen. Werden bspw. die Vorteile einer bestimmten Ausgestaltung der Klebetülle in einer bestimmten Anwendung beschrieben, ist dies auch als Offenbarung einer entsprechenden Verwendung der Klebetülle bzw. eines entsprechenden Installationsverfahrens zu lesen.

Die erste und zweite Seite des Flächenabschnitts liegen einander in Bezug auf dessen Dickenrichtung entgegengesetzt. Der sich von der ersten Seite weg erhebende Tüllenabschnitt erhebt sich in der Dickenrichtung, also mit einer zumindest anteiligen Erstreckung in Dickenrichtung. Der Flächenabschnitt kann bspw. eine Fläche von mindestens 10 cm², 20 cm² bzw. 30 cm² haben, mit möglichen (davon unabhängigen) Obergrenzen bei z. B. höchstens 0,8 m² bzw. 0,6 m². Je größer der Flächenabschnitt, desto größer kann auch die Klebefläche sein, was z. B. die Dichtigkeit und Beständigkeit erhöhen kann. Andererseits kann eine Begrenzung der Größe z. B. die Handhabung vereinfachen. In Dickenrichtung gesehen kann der Flächenabschnitt im Allgemeinen bspw. auch eine runde Form, also runde Außenkontur haben; bevorzugt ist eine Außenkontur mit geraden Seiten, insbesondere eine Rechteckform.

Der Tüllenabschnitt der Klebetülle bildet eine Durchgangsöffnung, an diese wird das Ende des Leitungsstücks angesetzt, bspw. ein- oder auch hindurchgeschoben. Die Durchgangsöffnung im Tüllenabschnitt schafft eine Verbindung zwischen der ersten und der zweiten Seite des Flächenabschnitts (sie kann aber im Ausgangszustand verschlossen sein und erst im Zuge der Montage geöffnet werden, siehe unten). Der Flächen- und der Tüllenabschnitt sind bereits vor der Montage am Schutzrohr in ihrer Relativposition zueinander festgelegt, der Tüllenabschnitt kann bspw. in den Flächenabschnitt einlaminiert sein (alternativ können die beiden bspw. auch gemeinsamen einem formenden Verfahren hergestellt werden, siehe unten). Der Tüllenabschnitt ist bevorzugt aus einem Elastomermaterial vorgesehen.

Das "Elastomermaterial" ist ganz allgemein ein Kunststoff mit elastischem Verhalten. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, etwa Silikonkautschuk bzw. Silikonelastomer. Das Stützelementmaterial kann bspw. eine Shore-Härte (D) von mindestens 50 Shore, 60 Shore bzw. 70 Shore haben, mit möglichen Obergrenzen bei höchstens 85 Shore bzw. 80 Shore, jedenfalls im Falle von Kunststoff.

Bei einer bevorzugten Ausführungsform erstreckt sich der Tüllenabschnitt schräg von dem Flächenabschnitt weg (er erstreckt sich anteilig in Dicken- und in Flächenrichtung). Eine Mittenachse des Tüllenabschnitts, die bspw. mittig und in Richtung dessen Durchgangsöffnung verläuft, liegt also nicht rechtwinklig zum Flächenabschnitt. In dem schräg orientierten Tüllenabschnitt kann das Leitungsstück unter Einhaltung gewisser Mindestbiegeradien aus dem Schutzrohr geführt werden, was einer Beschädigung vorbeugen kann (z. B. einem Abknicken). In bevorzugter Ausgestaltung schließen die Mittenachse und der Flächenabschnitt einen Winkel von höchstens 80° ein, weiter und besonders bevorzugt höchstens 70° bzw. 60°. Mögliche Untergrenzen können davon unabhängig bspw. bei mindestens 10°, 20° bzw. 30° liegen. Der betrachtete Winkel entspricht hierbei jeweils dem Schnittwinkel zwischen der Mittenachse und dem Flächenabschnitt, also zwischen der Mittenachse und einer den Flächenabschnitt beinhaltenden Ebene.

Der Tüllenabschnitt erhebt sich von dem Flächenabschnitt weg zu einem freien Ende hin. Sein bezogen auf die Mittenachse axial entgegengesetztes Ende könnte im Allgemeinen auch auf der zweiten Seite des Flächenabschnitts liegen, also einen gewissen Abstand dazu haben (in anderen Worten kann sich der Tüllenabschnitt durch den Flächenabschnitt hindurch erstrecken). Bevorzugt liegt das dem freien Ende entgegengesetzte Ende in einer Ebene mit dem Flächenabschnitt, was bspw. das Ansetzen des Leitungsstücks bzw. Aufkleben des Flächenabschnitts auf die Mantelwand vereinfachen kann.

Gemäß einer bevorzugten Ausführungsform ist ein einstückig, vorzugsweise monolithisch, mit dem Tüllenabschnitt geformter Flanschabschnitt vorgesehen, der zumindest einen Bereich des Flächenabschnitts bildet. "Einstückig" meint nicht zerstörungsfrei abtrennbar, der Tüllen- und der Flanschabschnitt können also bspw. als Zweikomponenten-Spritzgussteil geformt sein. "Monolithisch" meint aus demselben unterbrechungsfrei durchgehenden Material geformt (ohne Materialgrenze dazwischen), bspw. durch Pressen in eine Form oder durch Spritzgießen als eine Komponente. Der Flanschabschnitt bildet zumindest einen Bereich des Flächenabschnitts, was sich auf die Flächenrichtungen und/oder die Dickenrichtung beziehen kann. Der Flanschabschnitt kann gemeinsam mit einem Flächenmaterial, wie bspw. einer Folie und/oder einem Gewebe (siehe unten im Detail), den Flächenabschnitt bilden. Dabei kann ein Überlapp zwischen dem Flächenmaterial und dem Flanschabschnitt den Tüllenabschnitt zuverlässig am übrigen Flächenelement halten. Außerhalb des Überlapps kann allein das Flächenmaterial den Flächenabschnitt bilden, sodass es bspw. insgesamt flexibel ist und sich gut an die Krümmung der Mantelwand anpasst.

Andererseits kann auch bevorzugt sein, dass der Flanschabschnitt zumindest bezogen auf die Flächenrichtungen den gesamten Flächenabschnitt bildet. Bevorzugt gilt dies dann auch hinsichtlich der Dickenrichtung, bildet der einstückig bzw. monolithisch mit dem Tüllenabschnitt geformte Flanschabschnitt also für sich den gesamten Flächenabschnitt. Dies kann bspw. mit Blick auf große Stückzahlen eine vereinfachte und damit kostengünstige Herstellung ermöglichen, bei welcher der Tüllen- und der Flächenabschnitt gemeinsam in einem formenden Verfahren hergestellt werden (Pressen in eine Form oder Spritzguss), wobei anschließend im Wesentlichen nur noch die Klebstoffschicht auf die erste Seite des Flächenabschnitts aufgebracht werden muss.

Im Allgemeinen könnte die Klebstoffschicht auch erst im Zuge der Montage aufgebracht werden, also vom Monteur aufgestrichen; bevorzugt ist sie jedoch bereits zuvor auf dem Flächenabschnitt angeordnet. Gemäß einer bevorzugten Ausführungsform ist die Klebstoffschicht vor dem Herstellen des Klebeabzweigs mit einer Schutzabdeckung bedeckt, bspw. einem Wachspapier oder einer Folie. Diese verhindert ein Verschmutzen bzw. unbeabsichtigtes Verkleben, sie wird zum Aufkleben des Flächenabschnitts entfernt. Die Schutzabdeckung wird dann abgezogen und der Flächenabschnitt auf die Außenwandfläche geklebt. Generell bildet bevorzugt ein Haftklebstoff die Klebstoffschicht, der bspw. auf Acrylat-, Kautschuk- oder Silikonbasis vorgesehen sein kann.

Der Tüllenabschnitt ist gemäß einer bevorzugten Ausführungsform im Ausgangszustand verschlossen, vorzugsweise von einem monolithisch mit dem Tüllenabschnitt gebildeten Verschlusselement, bspw. einer in der Durchgangsöffnung angeordneten Membranwand oder einer endseitig (zum Beispiel am freien Ende) angeordneten Kappe. Bevorzugt wird der Verschluss nicht eigens vorab geöffnet, sondern mit dem Ansetzen des Leitungsstücks auf- bzw. abgetrennt. Das Ende des Leitungsstücks kann also bspw. die Membranwand aufreißen oder die Kappe abheben. Generell können an dem Flächenabschnitt auch mehrere Tüllenabschnitte angeordnet sein, können also mehrere Abzweige mit derselben Klebetülle hergestellt werden. Bevorzugt sind diese Tüllenabschnitte im Ausgangszustand jeweils verschlossen, sodass auch bei einer Nichtbelegung eines oder mehrerer Tüllenabschnitte ein dichter Verschluss der Öffnung geschaffen werden kann

Gemäß einer bevorzugten Ausführungsform weist der Flächenabschnitt eine Fasereinlage und/oder eine Kunststofffolie auf. Bei der Fasereinlage kann es sich bspw. um ein Gewebe bzw. Netz handeln, welches dem Flächenelement eine erhöhte Reißfestigkeit verleihen kann. Die Kunststofffolie kann vergleichsweise dünn sein, z. B. eine in Dickenrichtung genommene Dicke von höchstens 2 mm bzw. höchstens 1 mm haben (mit möglichen Untergrenzen bei z. B. mindestens 0,05 mm bzw. 0,1 mm). Zur Erhöhung der Reißfestigkeit können auch Fasern in die Kunststofffolie selbst eingearbeitet sein, alternativ oder zusätzlich zu der Laminierung mit einer Fasereinlage.

Im Folgenden werden weitere Details der Montage bzw. Anwendung beschrieben.

Das Leitungsstück, dessen Ende mit der Klebetülle abgezweigt wird, kann im Allgemeinen auch durch die Klebetülle nach außerhalb des Schutzrohres verlegt werden, sich dann also im fertig verlegten Zustand anteilig innerhalb des Schutzrohres erstrecken, die Klebetülle durchsetzen und anteilig außerhalb des Schutzrohres erstrecken. Es kann sich also bspw. um ein Kabel handeln, das durch die Tülle nach außen geführt wird. In bevorzugter Ausgestaltung ist das Leitungsstück ein Hohlrohrstück. Dieses wird dann bevorzugt zum Verlegen eines Kabels genutzt, insbesondere eines Datenkabels. Bevorzugt wird in dem Hohlrohr ein Glasfaserkabel verlegt, bspw. durch Einblasen. Das Hohlrohr kann z. B. einen Außendurchmesser von höchstens 30 mm, 25 mm, 20 mm bzw. 15 mm haben (mit möglichen Untergrenzen bei bspw. mindestens 7 mm bzw. 10 mm), was bei einer Wandstärke von 1 bis 2 mm einen Innenquerschnitt ergibt, in dem das Daten- bzw. Glasfaserkabel gut geführt ist.

In bevorzugter Ausgestaltung ist das Ende des Leitungsstücks bzw. Hohlrohrstücks im fertig montierten Zustand an oder in dem Tüllenabschnitt angeordnet. Es kann also an ein Ende des Tüllenabschnitts grenzen, bevorzugt liegt es im Tüllenabschnitt, also in der davon begrenzten Durchgangsöffnung. Zur Verlängerung des Leitungsstücks wird vorzugsweise ein weiteres Leitungsstück von außerhalb des Schutzrohres angesetzt. Bevorzugt wird das weitere Leitungsstück solchermaßen mit dem Tüllenabschnitt zusammengesetzt, dass sein Ende im fertig montierten Zustand innerhalb des Tüllenabschnitts angeordnet ist, also in der vom Tüllenabschnitt gebildeten Durchgangsöffnung. Bevorzugt werden also das in dem Schutzrohr geführte Leitungsstück und das weitere Leitungsstück über den Tüllenabschnitt zusammengesetzt und dazu jeweils in diesen eingeschoben (von entgegengesetzten Seiten her).

Im Allgemeinen könnten in dem Tüllenabschnitt bspw. auch zwei Kabelenden zusammengesteckt werden. Bevorzugt wird über den Tüllenabschnitt ein in dem Schutzrohr geführtes Hohlrohrstück mit einem weiteren Hohlrohrstück verbunden. Bevorzugt werden dazu beide Hohlrohrstücke in den Tüllenabschnitt eingeschoben, von den entgegengesetzten Seiten her. Die Hohlrohrstücke sind dann vorzugsweise derart miteinander verbunden, dass ihre Innenvolumina in fluidischer Kommunikation miteinander stehen. Dies kann bspw. hinsichtlich des Einführens eines Daten-/Glasfaserkabels von Vorteil sein, z. B. ein Einblasen des Kabels durch das in dem Schutzrohr geführte Hohlrohrstück über den Tüllenabschnitt in das weitere Hohlrohrstück ermöglichen (auch die andere Richtung wäre möglich, wenngleich diese weniger bevorzugt ist). In dem Tüllenabschnitt ist vorzugsweise ein Anschlag vorgesehen, bis zu welchem die Hohlrohrstücke von entgegengesetzten Seiten her eingeschoben werden.

Bei der Montage kann dann bspw. im Zuge von Erdreicharbeiten der Abzweig gelegt werden, bevorzugt mit weiteren Abzweigen entlang des Schutzrohres. Das Einblasen des bzw. der Daten-/Glasfaserkabel kann dann auch später erfolgen, bspw. nach dem Aufschütten des Grabens. Die erfindungsgemäße Verwendung der Klebetülle kann hierbei einen sicheren Übergang zwischen dem jeweiligen Hohlrohrstück im Schutzrohr und dem weiteren Hohlrohrstück ermöglichen, also bspw. die Gefahr eines Verfangens verringern. Wie bereits erwähnt, erfolgt das Einführen des Kabels/Datenkabels bevorzugt mit Druckluft durch Einblasen.

Bei einer bevorzugten Ausführungsform ist in dem Tüllenabschnitt ein Steckfitting angeordnet, in welches das in dem Schutzrohr geführte Hohlrohrstück und das weitere Hohlrohrstück von entgegengesetzten Seiten her eingeschoben werden. Das Steckfitting kann vorzugsweise eine Arretierung aufweisen (bspw. eine Verkrallungsstruktur), sodass der zum Einschieben des jeweiligen Hohlrohrstücks notwendige Kraftaufwand geringer als der zum Ausziehen notwendige Kraftaufwand ist. Entsprechend sind die Hohlrohrstücke dann zuverlässig zusammengehalten. Das Steckfitting kann bspw. als Einlegeteil in den Tüllenabschnitt eingeformt, also umspritzt werden; alternativ kann es auch in den Tüllenabschnitt eingesetzt werden, also in dessen Durchgangsöffnung eingeschoben.

Bei einer bevorzugten Ausführungsform wird der Flächenabschnitt solchermaßen auf die Mantelwand geklebt, dass er diese vollständig umschließt (bezogen auf einen Umlauf um die Längsachse des Schutzrohres). Werden dabei einander entgegengesetzte Randbereiche des Flächenabschnitts in Überlapp gebracht, also aufeinander geklebt, kann bspw. eine insgesamt stabile und zuverlässig dichtende Anordnung erreicht werden.

Gemäß einer bevorzugten Ausführungsform ist das Schutzrohr ein Wellrohr. Dies kann bspw. eine Verlegung mit einer gewissen Krümmung vereinfachen, schafft also einerseits Flexibilität. Andererseits kann eine Öffnung in einem Wellrohr aufgrund dessen Außenkontur schwerer abzudichten sein. In dieser Hinsicht kann der vollständig umlaufend, mit einem Überlapp aufgeklebte Flächenabschnitt von besonderem Vorteil sein, nämlich auch dann eine zuverlässige Abdichtung schaffen, wenn der Flächenabschnitt der Profilierung des Wellrohres nicht exakt folgt (in den Tälern). Betrachtet man die Öffnung in der Mantelwand in einem die Längsachse des Schutzrohres beinhaltenden Schnitt, kann eine zuverlässige Abdichtung bereits dann erreicht werden, wenn der Flächenabschnitt jeweils vollständig umlaufend auf der Erhebung vor und der Erhebung hinter der Öffnung anliegt (also an den die Öffnung axial einfassenden Erhebungen des Wellrohrs).

Gemäß einer bevorzugten Ausführungsform ist das Einbringen der Öffnung in die Mantelwand des Schutzrohres Teil der erfindungsgemäßen Verwendung, wird also vor der Montage der Klebetülle die Öffnung eingeschnitten. Bevorzugt ist die Leitung, insbesondere das Hohlrohr, in diesem Zeitpunkt bereits in dem Schutzrohr verlegt und erstreckt es sich über den Abschnitt hinaus, in dem die Öffnung eingebracht wird. Entsprechend wird in bevorzugter Ausgestaltung nach dem Einschneiden der Öffnung zur Erzeugung des Leitungs- bzw. Hohlrohrstücks die in dem Schutzrohr geführte Leitung bzw. das im Schutzrohr geführte Hohlrohr durchtrennt. Der auf den Abzweig folgende Abschnitt davon kann bspw. ungenutzt in dem Schutzrohr verbleiben.

Insgesamt kann dieses Vorgehen eine vereinfachte Montage ermöglichen, speziell im Falle mehrerer Abzweige entlang des Schutzrohres. Deren Position lässt sich vorab mitunter gar nicht oder jedenfalls nur mit Aufwand bestimmen, dem kann durch die Vorverlegung eines entsprechenden Leitungs- bzw. Hohlrohrstrangs in dem Schutzrohr Rechnung getragen werden. So können die Positionen der Abzweige entlang des Schutzrohres jeweils genau an die örtlichen Gegebenheiten angepasst werden, auch unter Berücksichtigung minimaler Biegeradien etc. So kann entlang des Schutzrohres Abzweig für Abzweig je Verbraucher bzw. Haushalt so positioniert werden, dass der jeweilige Aufwand für die Verlegung des letzten Teilstücks (also das weitere Leitungs- bzw. Hohlrohrstück) minimiert wird. Generell verläuft das Schutzrohr bevorzugt in einem Graben, der nach dem Herstellen des Abzweigs / der Abzweige zugeschüttet wird (das Schutzrohr ist dann mit Erdreich bedeckt).

### Kurze Beschreibung der Zeichnungen

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Klebetülle in einem schematischen Schnitt;
- Figur 2: eine auf einem Schutzrohr montierte Klebetülle in schematischer Darstellung;
- Figur 3: eine weitere Klebetülle in einem schematischen Schnitt;
- Figur 4: eine Prinzipskizze zur Montage der Klebetülle auf einem Wellrohr;
- Figur 5: einen zur Achsrichtung senkrechten Schnitt zu Figur 4;
- Figur 6: einen Ausschnitt einer Klebetülle mit einem eingesetzten Steckfitting.

### Bevorzugte Ausführung der Erfindung

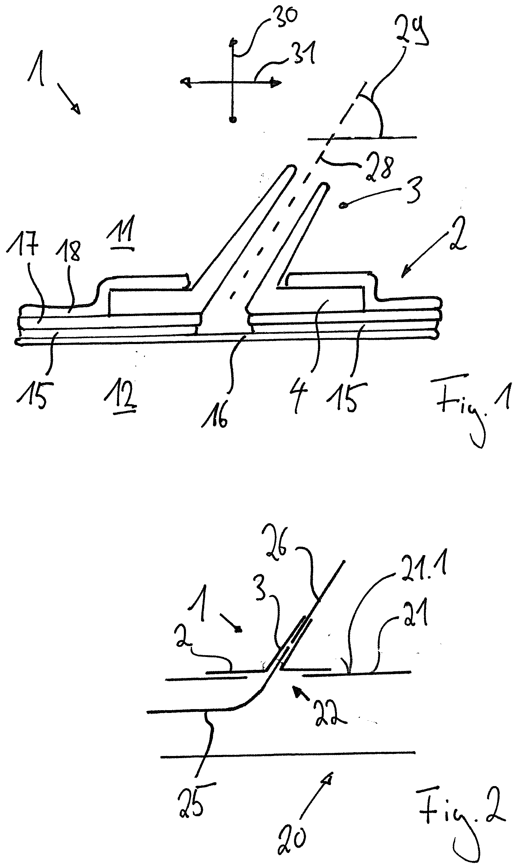

Figur 1 zeigt eine Klebetülle 1, die einen Flächenabschnitt 2 und einen Tüllenabschnitt 3 aufweist. Der Tüllenabschnitt 3 ist aus einem Elastomermaterial vorgesehen; aus diesem ist monolithisch mit dem Tüllenabschnitt 3 ein Flanschabschnitt 4 geformt, im vorliegenden Beispiel durch Spritzguss aus einem thermoplastischen Elastomer. Der Flanschabschnitt 4 bildet einen Bereich des Flächenabschnitts 2 und hält den Tüllenabschnitt 3 daran, er ist einlaminiert. Der Tüllenabschnitt 3 erhebt sich an einer ersten Seite 11 des Flächenabschnitts 2, an der entgegengesetzten zweiten Seite 12 des Flächenabschnitts 2 ist eine Klebstoffschicht 15 angeordnet, nämlich ein Haftkleber. Dieser ist in der Situation gemäß Figur 1 noch mit einer Schutzabdeckung 16 versehen, vorliegend einem Wachspapier.

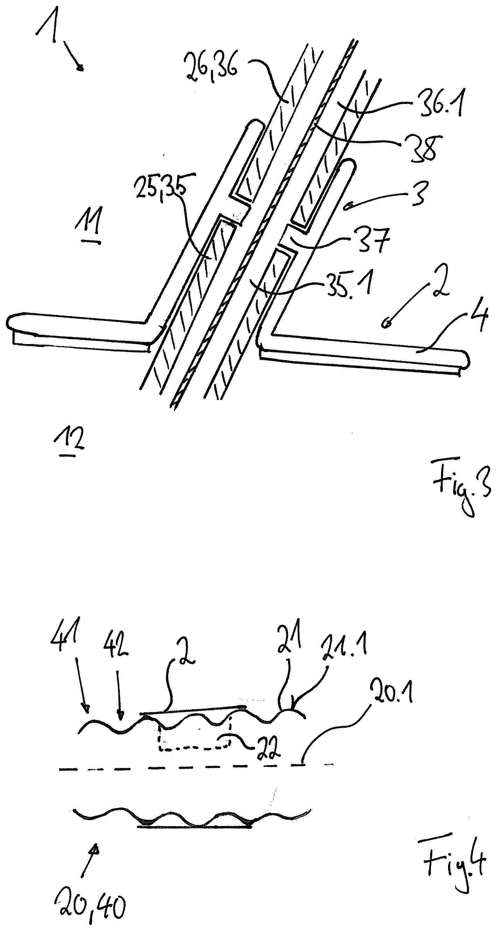

Figur 2 illustriert die Montage der Klebetülle 1 auf einem Schutzrohr 20. In dessen Mantelwand 21 ist eine Öffnung 22 eingebracht, durch diese wird ein Leitungsstück 25 abgezweigt. Dazu wird das Ende des Leitungsstücks von der zweiten Seite 12 her in den Tüllenabschnitt 3 der Klebetülle 1 eingeschoben, anschließend wird der Flächenabschnitt 2 solchermaßen auf die Außenwandfläche 21.1 der Mantelwand 21 geklebt, dass die Klebetülle 1 die Öffnung 22 bedeckt. Zur Verlängerung des Leitungsstücks 25 wird von der ersten Seite 11 her ein weiteres Leitungsstück 26 in den Tüllenabschnitt 3 eingeschoben, vergleiche auch die Detailansicht gemäß Figur 3.

Mit dem flexiblen Flächenabschnitt 2 und der Klebstoffschicht 15 lässt sich einerseits die Öffnung 22 gut verschließen, andererseits sind die Leitungsstücke 25, 26 in dem Tüllenabschnitt 3 gut gehalten. Wie aus den Figuren 1 und 2 ersichtlich, schließt die Mittenachse 28 des Tüllenabschnitts 3 mit dem Flächenabschnitt 2, insbesondere dessen erster Seite 11, einen Winkel 29 ein, der vorliegend rund 60° beträgt. Dadurch ist dem Leitungsstück 25 an dem Abzweig ein gewisser Mindestbiegeradius vorgegeben, wird also einem Abknicken vorgebeugt.

In der Variante gemäß Figur 1 weist der Flächenabschnitt 2 der Klebetülle 1 eine Kunststofffolie 17 und eine Gewebeeinlage 18 auf, dazwischen ist der Flanschabschnitt 4 einlaminiert. Auf die Kunststofffolie 17 ist die Klebstoffschicht 15 aufgebracht, die in Dickenrichtung 30 entgegengesetzt angeordnete Gewebeschicht 18 schafft Stabilität. Zur Orientierung ist zusätzlich zur Dickenrichtung 30 die Flächenrichtung 31 des Flächenabschnitts 2 eingezeichnet.

Figur 3 zeigt eine weitere Klebetülle 1 mit einem Flächenabschnitt 2 und einem Tüllenabschnitt 3. Im Unterschied zu der Variante gemäß Figur 1 bildet in diesem Fall der Flanschabschnitt 4 für sich den gesamten Flächenabschnitt 2, ist also keine Kunststofffolie oder Gewebeeinlage anlaminiert. Die Klebstoffschicht 15 ist direkt auf den Flanschabschnitt 4 aufgebracht. Bei dem Leitungsstück 25 handelt es sich vorliegend um ein Hohlrohrstück 35, und auch das weitere Leitungsstück 26 ist ein Hohlrohrstück 36. Die Hohlrohrstücke 35, 36 sind in dem Tüllenabschnitt 3 zusammengesteckt, sie sind jeweils bis zu einem Anschlag 37 eingeschoben. Über den Tüllenabschnitt 3 sind die Hohlrohrstücke 35, 36 derart miteinander verbunden, dass ihre Innenvolumina 35.1, 36.1 unterbrechungsfrei ineinander übergehen. Damit lässt sich im Anschluss gut ein Datenkabel 38 hindurchführen, insbesondere ein Glasfaserkabel einblasen.

Figur 4 zeigt einen schematischen Schnitt durch ein als Wellrohr 40 ausgebildetes Schutzrohr 20. Die Mantelwand 21 ist also mit umlaufenden Erhöhungen 41 und Vertiefungen 42 geformt. Eine entsprechend konturierte Außenwandfläche 21.1 kann im Einzelnen schwer abzudichten sein. Wird der Flächenabschnitts 2 der Klebetülle 1 (im Übrigen nicht dargestellt) jedoch derart vorgesehen, dass er das Wellrohr 40 vollständig umschließt, lässt sich die Öffnung 22 dicht verschließen, auch wenn der Flächenabschnitt 2 in axialer Richtung nicht exakt der Kontur der Außenwandfläche 21.1 folgt.

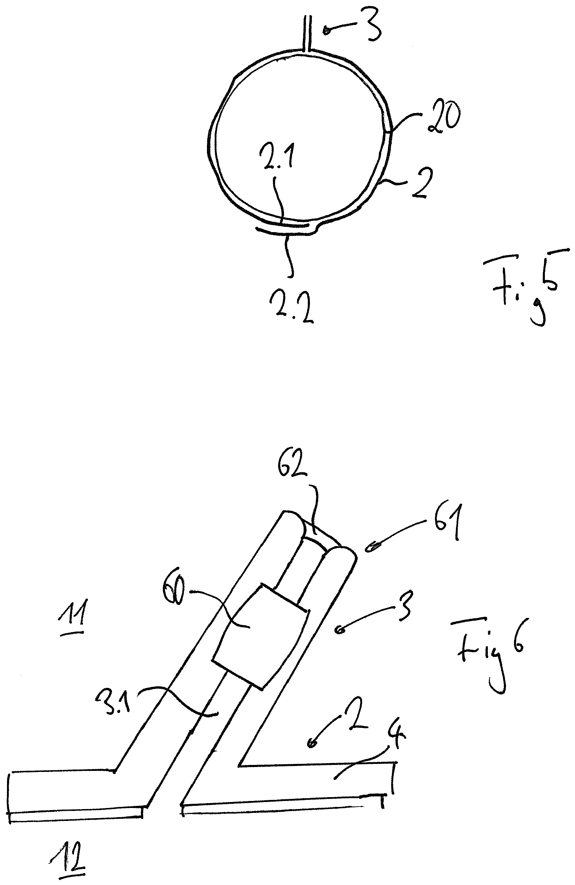

Figur 5 illustriert dies in einem zur axialen Richtung senkrechten Schnitt, der Flächenabschnitt 2 umschließt das Schutzrohr 20 vollständig. Einander entgegengesetzte Randbereiche 2.1, 2.2 des Flächenabschnitts 2 überlappen.

Figur 6 zeigt eine Klebetülle 1, die prinzipiell analog jener gemäß Figur 3 aufgebaut ist. Im Unterschied dazu ist in den Tüllenabschnitt 3 ein Steckfitting 60 eingesetzt, nämlich von der zweiten Seite 12 her eingeschoben. In diesem Steckfitting 60, das aus dem Leitungsbau bekannt ist, können Hohlrohrstücke 35, 36 zusammengesetzt werden, auch insoweit wird wiederum auf Figur 3 verwiesen. Die Durchgangsöffnung 3.1 des Tüllenabschnitts 3 gemäß Figur 6 ist an dessen freiem Ende 61 noch mit einer Membran 62 verschlossen. Die Membran 62 ist monolithisch mit dem Tüllenabschnitt 3 geformt und schützt das Fitting 60 vor dem Ansetzen des weiteren Hohlrohrstücks 36 vor einer Verschmutzung.

## Patentansprüche

1. Verwendung einer Klebetülle (1),
welche Klebetülle (1) einen Flächenabschnitt (2) und einen Tüllenabschnitt (3) aufweist,
wobei sich der Tüllenabschnitt (3) von einer ersten Seite (11) des Flächenabschnitts (2) wegerhebt,
und wobei an einer der ersten Seite (11) entgegengesetzten zweiten Seite (12) des Flächenabschnitts (2) eine Klebstoffschicht (15) angeordnet ist,
zum Herstellen eines Leitungsabzweigs,
nämlich zum Abzweigen eines Endes eines in einem Schutzrohr (20) geführten Leitungsstücks (25) an einer Öffnung (22) in einer Mantelwand (21) des Schutzrohres (20),
wobei das Ende des Leitungsstücks (25) von der zweiten Seite (12) des Flächenabschnitts (2) her an den Tüllenabschnitt (3) gesetzt wird,
und der Flächenabschnitt (2) mittels der Klebstoffschicht (15) auf eine Außenwandfläche (21.1) der Mantelwand (21) geklebt und die Klebetülle (1) dabei derart platziert wird, dass sie die Öffnung (22) in der Mantelwand (21) bedeckt.

2. Verwendung nach Anspruch 1, bei welcher die Klebetülle (1) derart ausgestaltet ist, dass sich der Tüllenabschnitt (3) bereits vor dem Herstellen des Leitungsabzweigs schräg von der ersten Seite (11) des Flächenabschnitts (2) wegerhebt.

3. Verwendung nach Anspruch 2, bei welcher sich der Tüllenabschnitt (3) solchermaßen schräg von der ersten Seite (11) des Flächenabschnitts (2) wegerhebt, dass eine Mittenachse (28) des Tüllenabschnitts (3) mit dem Flächenabschnitt (2) einen Winkel (39) von mindestens 10° und höchstens 80° einschließt.

4. Verwendung nach einem der vorstehenden Ansprüche, bei welcher die Klebetülle (1) einen Flanschabschnitt (4) aufweist, der einstückig mit dem Tüllenabschnitt (3) geformt ist, wobei der Flanschabschnitt (4) zumindest einen Bereich des Flächenabschnitts (2) bildet.

5. Verwendung nach einem der vorstehenden Ansprüche, bei welcher auf der Klebstoffschicht (15) vor dem Herstellen des Leitungsabzweigs eine Schutzabdeckung (16) angeordnet ist, die zum Aufkleben des Flächenabschnitts (2) auf die Außenwandfläche (21.1) der Mantelwand (21) entfernt wird.

6. Verwendung nach einem der vorstehenden Ansprüche, bei welcher eine von dem Tüllenabschnitt (3) gebildete Durchgangsöffnung (3.1) vor dem Herstellen des Leitungsabzweigs verschlossen ist und dann geöffnet wird.

7. Verwendung nach einem der vorstehenden Ansprüche, bei welcher der Flächenabschnitt (2) eine Fasereinlage (18) und/oder eine Kunststofffolie (17) aufweist.

8. Verwendung nach einem der vorstehenden Ansprüche, bei welcher das in dem Schutzrohr (20) geführte Leitungsstück (25) ein Hohlrohrstück (35) ist, in dem ein Datenkabel (38) verlegt wird.

9. Verwendung nach einem der vorstehenden Ansprüche, wobei bei dem fertig hergestellten Leitungsabzweig das Ende des Leitungsstücks (25) an oder in dem Tüllenabschnitt (3) angeordnet ist, wobei zur Verlängerung außerhalb des Schutzrohres (20) ein weiteres Leitungsstück (26) angesetzt wird, nämlich dessen Ende von der ersten Seite (11) des Flächenabschnitts (2) her an den Tüllenabschnitt (3) gesetzt wird.

10. Verwendung nach den Ansprüchen 8 und 9, bei welcher auch das weitere Leitungsstück (26) ein Hohlrohrstück (36) ist, wobei die Hohlrohrstücke (35,36) über den Tüllenabschnitt (3) miteinander verbunden werden.

11. Verwendung nach Anspruch 10, bei welcher der Tüllenabschnitt (3) ein Steckfitting (60) aufweist, in welches die Hohlrohrstücke (35,36) eingesteckt und so miteinander verbunden werden.

12. Verwendung nach einem der vorstehenden Ansprüche, bei welcher der Flächenabschnitt (2) solchermaßen auf die Außenwandfläche (21.1) der Mantelwand (21) geklebt wird, dass er diese vollständig umschließt und einander entgegengesetzte Randbereiche (2.1,2.2) des Flächenabschnitts (2) aufeinander liegen.

13. Verwendung nach einem der vorstehenden Ansprüche, bei welcher das Schutzrohr (20) ein Wellrohr (40) ist.

14. Verwendung nach einem der vorstehenden Ansprüche, bei welcher vor der Montage der Klebetülle (1), also vor dem Ansetzen des Leitungsstücks (25) und dem Aufkleben des Flächenabschnitts (2), die Öffnung (22) in die Mantelwand (21) des Schutzrohres (20) eingeschnitten wird.

15. Verwendung nach Anspruch 14, bei welcher nach dem Einschneiden der Öffnung (22) in die Mantelwand (21) eine in dem Schutzrohr (20) geführte Leitung zur Erzeugung des Leitungsstücks (26) durchtrennt wird.
